# EUROPÄISCHE PATENTSCHRIFT

(11) **EP 1 221 364 B1**
(45) Veröffentlichungstag und Bekanntmachung des Hinweises auf die Patenterteilung: **05.01.2011**
(21) Anmeldenummer: 01127219.2
(22) Anmeldetag: 16.11.2001
(51) Int. Cl.: B29C 45/67

(54) **Spritzgiessmaschine mit vertikal verfahrbarer Schliesseinheit**
Injection molding machine with vertically movable clamping unit
Machine à mouler par injection avec dispositif de fermeture à deplacement vertical

(30) Priorität: 01.01.2001 DE 10100001
(43) Veröffentlichungstag der Anmeldung: 10.07.2002
(73) Patentinhaber: Klöckner Desma Elastomertechnik GmbH, 78567 Fridingen (DE)
(72) Erfinder: Wernz, Ulrich, 78532 Tuttlingen/Nendingen (DE)
(74) Vertreter: Röther, Peter

(56) Entgegenhaltungen:
- DE-A- 1 912 240
- DE-A- 2 040 295
- DE-A- 4 414 764
- DE-C- 19 859 277
- US-A- 4 383 816
- PATENT ABSTRACTS OF JAPAN vol. 018, no. 190 (M-1586), 31. März 1994 (1994-03-31) & JP 06 000618 A (TOYOTA MOTOR CORP), 11. Januar 1994 (1994-01-11)
- PATENT ABSTRACTS OF JAPAN vol. 016, no. 471 (M-1318), 30. September 1992 (1992-09-30) & JP 04 168004 A (SUMITOMO HEAVY IND LTD), 16. Juni 1992 (1992-06-16)
- PATENT ABSTRACTS OF JAPAN vol. 007, no. 001 (M-183), 6. Januar 1983 (1983-01-06) & JP 57 160621 A (HASHIMOTO FORMING KOGYO KK), 4. Oktober 1982 (1982-10-04)
- PATENT ABSTRACTS OF JAPAN vol. 1998, no. 03, 27. Februar 1998 (1998-02-27) & JP 09 295077 A (MITSUBISHI HEAVY IND LTD), 18. November 1997 (1997-11-18)

## Beschreibung

Die Erfindung betrifft eine Spritzgießmaschine mit vertikal verfahrbarer Schließeinheit gemäß den Merkmalen des Oberbegriffs des Patentanspruchs 1.

Im Laufe einer jahrzehntelangen Entwicklung hat es sich für eine Vielzahl von Anwendungsfällen zur Herstellung von Artikeln aus Kunststoff oder Gummimischungen als sinnvoll erwiesen, für diese Herstellungsprozesse beispielsweise aus der EP 0490248 A2 bekannte Spritzgießmaschinen mit vertikal verfahrbarer Schließeinheit zu verwenden, so daß die erzeugten Artikel nach dem Öffnen des Werkzeugs aus dessen horizontaler Trennebene nach oben herausragen und dementsprechend auch nach oben entnommen werden können. Das ist beispielsweise von Vorteil, wenn sich in einem Werkzeug eine Vielzahl von Formnestern für verhältnismäßig kleine Artikel befindet, die aufgrund ihrer eventuell Hinterschneidungen aufweisenden Form oder ihres Materials gelegentlich Schwierigkeiten bei ihrer Entnahme aus dem jeweiligen Formnest bereiten können und daher ständig von einem Mitglied des Bedienungspersonals beobachtet und bei Bedarf von diesem - mit oder ohne Spezialwerkzeug - per Hand entfernt werden müssen, oder wenn die Spritzgießmaschine Bestandteil einer Produktionsstraße ist, in der die Weitergabe der erzeugten Artikel an die nächste Bearbeitungsstation am einfachsten durch eine Verschiebe- oder Verschwenkbewegung in einer zur Trennebene des Werkzeugs parallelen horizontalen Ebene in Verbindung mit einer anfänglichen Hub- und einer abschließenden Absetzbewegung erfolgt. Abgesehen davon, daß Spritzgießmaschinen mit vertikal verfahrbarer Schließeinheit im allgemeinen eine geringere Aufstandsfläche als entsprechende Spritzgießmaschinen mit horizontal verfahrbarer Schließeinheit benötigen und daher in einer vorhandenen Produktionshalle auch flexibler installiert werden können.

Bei diesen Spritzgießmaschinen mit vertikal verfahrbarer Schließeinheit hat es sich darüber hinaus in vielen Anwendungsfällen als sinnvoll erwiesen, das Oberjoch als feststehende Formaufspannplatte vorzusehen und die verfahrbare Formaufspannplatte an dem als Gegendruckplatte ausgebildeten Unterjoch abzustützen und von dort gegen die feststehende Formaufspannplatte zu verfahren. Das hat insbesondere den Vorteil, daß das Oberjoch nicht auch noch die Antriebseinheiten für das Anheben und Absenken der verfahrbaren Formaufspannplatte in Form von Fahrzylindern und üblicherweise noch vorhandene zusätzliche Einrichtungen zur Erzeugung des Schließdrucks tragen muß und daher sowohl die Holme als auch das Oberjoch in materialsparender Weise weniger mächtig ausgebildet werden können. Das Unterjoch muß dann zwar Anschläge für die Fahrzylinder und zusätzliche Einrichtungen zur Erzeugung des Schließdrucks aufnehmen, benötigt aber darüber hinaus keine stabilitätserhöhenden Verstärkungen, da es die Belastungen durch Fahrzylinder und Schließdruckerzeugung unmittelbar in den Untergrund weiterleiten kann. Die erforderliche Plastifizier- und Einspritzeinheit ist dann entweder auf oder über der feststehenden Formaufspannplatte so angeordnet, daß sie die fließfähige Kunststoffschmelze oder eine fließfähige Gummimischung von oben in den vertikal in der feststehenden Formaufspannplatte verlaufenden Angußkanal oder ein entsprechendes System von Verteilerkanälen einspeist, oder sie wird jeweils seitlich an die Trennebene des Werkzeugs herangefahren, um die fließfähige Kunststoffschmelze oder eine fließfähige Gummimischung seitlich in ein in der Trennebene angeordnetes System von Verteilerkanälen einzuspritzen.

Als Antriebseinheiten für das Anheben und Absenken der verfahrbaren Formaufspannplatte werden bei Spritzgießmaschinen der vorgenannten Art üblicherweise ein oder mehrere hydraulisch betätigbare Fahrzylinder kleinen Querschnitts und großer Hublänge verwendet, deren der verfahrbaren Formaufspannplatte abgewandtes Ende des Zylindergehäuses im oder am Randbereich der Gegendruckplatte an dieser angeschlagen und deren der Gegendruckplatte abgewandtes Ende der Kolbenstange in oder am Randbereich der verfahrbaren Formaufspannplatte an dieser kraftschlüssig befestigt ist. Die Erzeugung des Schließdruckes erfolgt dann mittels eines in der Gegendruckplatte angeordneten Druckkissens, das nach dem Stand der Technik aus einem beidseitig mit einer Hydraulikflüssigkeit beaufschlagbaren Kurzhubzylinder größeren Querschnitts und vertikaler Bewegungsrichtung mit einer maximalen Auslenkung in der Größenordnung von h_{K} = 50 mm besteht, dessen - ansatzweise - Kolbenstange eine horizontale Endfläche aufweist, die im Ruhezustand des Druckkissens im wesentlichen mit der oberen Begrenzungsfläche der Gegendruckplatte fluchtet.

Die zeitweise Kopplung des vorgenannten Druckkissens an die verfahrbare Formaufspannplatte zur Erzeugung des Schließdrucks des von den Fahrzylindern zusammengeführten Werkzeugs erfolgt dann üblicherweise entweder mittels einer Anordnung, bei der ein kraftschlüssig mit der Unterseite der verfahrbaren Formaufspannplatte verbundener und von dort nach unten weisender Stempel vorgegebener Länge und ausreichender Stabilität bei abgesenkter verfahrbarer Formplatte in eine zentrische Bohrung des Kolbens und der - ansatzweisen - Kolbenstange des Druckkissens, das in diesem Falle einen Ringkolben ausbildet, sowie gegebenenfalls der Unterseite der Gegendruckplatte eintaucht und bei angehobener verfahrbarer Formaufspannplatte mit seiner unteren horizontalen Endfläche gerade so weit oberhalb der oberen - jetzt ringförmigen - Endfläche der - ansatzweisen - Kolbenstange zum Stillstand kommt, daß in den Spalt zwischen unterer Stempelendfläche und oberer Endfläche der Kolbenstange von der Seite her eine ausreichend stabile Schwenkscheibe eingeklappt werden kann, oder aber mittels eines im ausgefahrenen Zustand der verfahrbaren Formaufspannplatte zwischen deren Unterseite und die obere Endfläche der - ansatzweisen - Kolbenstange des Kurzhubzylinders von der Seite her einschwenkbaren Druckstocks, d.h. ebenfalls eines Stempels vorgegebener Länge und ausreichender Stabilität. Eine derartige Vorrichtung ist beispielsweise aus Patent Abstracts of Japan Bd. 018, Nr. 190 (M-1586), JP 06000618 A bekannt.

Die erstgenannte Kopplung wird beispielsweise bei Maschinen der Patentanmelderin verwirklicht, die einen Stempel nicht nur vorgegebener, sondern konstanter Länge verwenden und für den Fall einer erwünschten Anpassung der Spritzgießmaschine an unterschiedliche Werkzeughöhen in der feststehenden Formaufspannplatte eine in diese integrierte und gegenüber den oberen Enden der Holme wirksame mechanische Höhenverstellung aufweisen, die jedoch die kraftschlüssige Verbindung zwischen dieser Platte und den Holmen im jeweils festgelegten Zustand unberührt läßt. Die zweitgenannte Kopplung wird beispielsweise bei Maschinen der Firma Dieffenbacher verwendet, war aber auch schon Bestandteil in Drehtisch-Spritzgießanlagen zur Herstellung von Artikeln aus Gummimischungen der Rechtsvorgängerin der Patentanmelderin, der Klöckner Ferromatik Desma GmbH, in den 80iger Jahren. Bei den Spritzgießmaschinen der Firma Dieffenbacher erfolgt die Anpassung der Maschine an unterschiedliche Werkzeughöhen durch mechanische Verlängerung oder Verkürzung des Druckstocks mittels einer in ihn integrierten Gewindeanordnung.

Als nachteilig erweist sich bei allen Spritzgießmaschinen der vorbeschriebenen Art jedoch, daß aufgrund der Integration des Druckkissens in die Gegendruckplatte die gesamte Höhe aus Gegendruckplatte und abgesenkter verfahrbarer Formaufspannplatte einschließlich der darauf aufgespannten Werkzeughälfte und damit die sogenannte Bedienhöhe einen vorgegebenen Mindestwert in der Größenordnung von h_{B} = 1000 mm nicht unterschreiten kann, so daß eine ergonomische Handhabung der Trennebene der abgesenkten Werkzeughälfte und der aus dieser herausragenden erzeugten Spritzgießartikel nur dann erfolgen kann, wenn die Maschine in einer - aufwendigen - Grube installiert wird oder das zuständige Mitglied des Bedienungspersonals zwangsläufig von einem - schon wegen häufigen Verlassens und Wiederbesteigens unfallträchtigen - Podest aus arbeitet.

Der vorliegenden Erfindung liegt daher die Aufgabe zugrunde, Spritzgießmaschinen mit vertikal verfahrbarer Schließeinheit zur Verfügung zu stellen, die es aufgrund ihrer konstruktiven Ausgestaltung gestatten, ohne zusätzliche Maßnahmen von ihrer Aufstandsfläche aus eine Bedienhöhe sicherzustellen, die in der Größenordnung von h_{B} = 750 mm liegt.
Die Erfindung löst diese Aufgabe mit Hilfe der Gesamtheit der Merkmale des Patentanspruchs 1.

Dabei erweist es sich als besonders vorteilhaft, daß der zuschaltbare Kurzhubzylinder eine in der Anlagestellung aus dem Außenraum der Schließeinheit in horizontaler Richtung zwischen Gegendruckplatte und verfahrbare Formaufspannplatte ein- und ausfahrbare, mit einem fluiden Medium beaufschlagbare Kolben-Zylinder-Anordnung ist, weil damit in jedem Fall die Gegendruckplatte ohne integriertes Druckkissen und damit bei gleicher Stabilität mit deutlich geringerer Höhe ausbildbar ist, so daß mit einer solchen Gegendruckplatte in Verbindung mit einer in jedem Falle auf ihrer Unterseite ebenen verfahrbaren Formaufspannplatte und der auf dieser arretierten unteren Werkzeughälfte tatsächlich eine Bedienhöhe in der Größenordnung von h_{B} = 750 mm oberhalb der Aufstandsfläche der Spritzgießmaschine erreichbar ist. Dies erfordert zwar die Installation einer zusätzlichen Anordnung zum horizontalen Ein- und Ausfahren der für die Erzeugung des Schließdrucks vorgesehenen Kolben-Zylinder-Anordnung, vermindert aber demgegenüber nicht nur die Höhe der Gegendruckplatte in zielgerichteter Weise, sondern vereinfacht deren Aufbau erheblich und läßt außerdem den Verschwenkungsmechanismus für eine Schwenkscheibe oder einen Druckstock sowie letztere selbst fortfallen, so daß der Vorteil der ergonomischen Bedienhöhe bei weitem überwiegt.

Als vorteilhaft ist dabei anzusehen, dass die Kolben-Zylinder-Anordnung neben dem kurzfristig mit einem fluiden Medium füll-und entleerbaren Hubvolumen zur Erzeugung des Kurzhubs ein weiteres Vorspannvolumen aufweist, das in willkürlichen größeren Zeitintervallen mit unterschiedlichen Mengen des fluiden Mediums beaufschlagbar ist, um die Ausgangshöhe der Kolben-Zylinder-Anordnung für den Kurzhubbetrieb an unterschiedliche Werkzeughöhen anpassen zu können, da dies gestattet, auf jedwede mechanische oder auch elektromechanische Vorrichtung zur Anpassung der Spritzgießmaschine an unterschiedliche Werkzeughöhen zu verzichten, sei es eine in der feststehenden Formaufspannplatte integrierte Werkzeughöhenverstellung, die eine aufwendige Zusatzbearbeitung sowohl dieser Formaufspannplatte als auch der oberen Enden der Holme erfordert, oder auch ein mit einer integrierten Gewindeanordnung versehener Druckstock.

Dabei ist es bei einem weiteren Ausführungsbeispiel der in Rede stehenden Spritzgießmaschine als besonders vorteilhaft anzusehen, wenn Hubvolumen und Vorspannvolumen einen gemeinsamen Raum ausbilden, da dies eine besonders einfache und kostengünstige Herstellung der für die Erzeugung des Schließdrucks und die Kopplung des Kurzhubzylinders sowohl mit der Gegendruckplatte als auch mit der verfahrbaren Formaufspannplatte erforderlichen Kolben-Zylinder-Anordnung gestattet, wobei in weiterer vorteilhafter Weise einerseits die Definition des Hubvolumens durch die Steuerung der zu- und abfließenden Menge von fluidem Medium zur Erzeugung des Kurzhubs erfolgen kann und andererseits als fluides Medium Hydraulikflüssigkeit bekannter Art verwendbar ist. Selbstverständlich ist es in speziellen Anwendungsfällen auch möglich, innerhalb der Kolben-Zylinder-Anordnung zwei getrennte Zylinderräume für Hub- und Vorspannvolumen vorzusehen, beispielsweise in der Form, daß in der Kolbenstange des Kurzhubkolbens eine weitere Kolben-Zylinder-Einheit als Vorspannsystem angeordnet ist.

Eine vorteilhafte Ausführungsform der erfindungsgemäßen Spritzgießmaschine ist auch dann gegeben, wenn die Kolben-Zylinder-Anordnung mittels einer oder mehrerer, mit einem fluiden Medium beaufschlagbarer Kolben-Zylinder-Einheiten mit horizontaler Längsachse in die Schließeinheit ein- und ausgefahren wird, weil dies eine erprobte und bewährte Methode zur schnellen und zielgerichteten Verschiebung beweglicher Elemente größerer Masse ist, deren Übertragung auf den vorliegenden Fall keinerlei konstruktive Schwierigkeiten aufweist. Dieselben Vorteile gelten andererseits auch für Ausführungsformen der vorliegenden Spritzgießmaschine, bei denen die Kolben-Zylinder-Anordnung mittels eines oder mehrerer, elektromotorisch betätigter Spindelantriebe mit horizontaler Längsachse oder mittels eines oder mehrerer, elektromotorisch betätigter Zahnrad-Zahnstangen-Antriebe mit horizontaler Längsachse in die Schließeinheit ein- und ausfahrbar ist.

Als vorteilhafte Weiterbildung der in Rede stehenden Spritzgießmaschine ist auch eine solche anzusehen, bei der die der Gegendruckplatte zugewandte untere Bodenfläche der Kolben-Zylinder-Anordnung unmittelbar auf der Gegendruckplatte und einer deren obere Deckfläche verlängernden Stützplatte verfahren wird, da dies eine besonders einfache und damit kostengünstige Konstruktion der zur Längsführung und Abstützung der horizontal verfahrbaren Kolben-Zylinder-Anordnung erforderlichen Elemente gestattet - jedenfalls dann, wenn die dem Ein- und Ausfahren der Kolben-Zylinder-Anordnung dienenden Antriebselemente von vornherein eine ausreichende Seitenstabilität der horizontalen Ein- und Ausfahrbewegung sicherstellen. Anderenfalls läßt sich eine solche Seitenstabilität bei einer weiteren Ausführungsform der erfindungsgemäßen Spritzgießmaschine in vorteilhafter Weise auch dadurch erreichen, daß der Bereich der Gegendruckplatte und der Stützplatte, der von der unteren Bodenfläche der Kolben-Zylinder-Anordnung berührt wird, als Flachbett ausgebildet ist.

Eine vorteilhafte Ausführungsform der vorliegenden Spritzgießmaschine ist auch dann gegeben, wenn mindestens der Bereich der Gegendruckplatte und der Stützplatte, der von der unteren Bodenfläche der Kolben-Zylinder-Anordnung berührt wird, und/oder die untere Bodenfläche der Kolben-Zylinder-Anordnung vor dem bestimmungsgemäßen Einsatz einer Oberflächenbehandlung zur Erniedrigung des Reibungs-Koeffizienten unterzogen wird, da dies in jedem Fall die Gleitfähigkeit der Kolben-Zylinder-Anordnung auf der Gegendruckplatte und der Stützplatte deutlich erhöht, so daß für die Ein- und Ausfahrbewegung entweder Antriebselemente geringerer Leistung und damit üblicherweise auch geringerer Kosten einsetzbar oder aber höhere Ein- und Ausfahrgeschwindigkeiten bei vermindertem Materialverschleiß erzielbar sind. Der letztgenannte vorteilhafte Effekt läßt sich bei einer Weiterbildung der in Rede stehenden Spritzgießmaschine auch noch dadurch verbessern, daß in den Bereich zwischen Gegendruckplatte und Stützplatte einerseits und unterer Bodenfläche der Kolben-Zylinder-Anordnung andererseits kontinuierlich oder diskontinuierlich ein Schmiermittel eingebracht wird.

Bei einer weiteren Ausführungsform der erfindungsgemäßen Spritzgießmaschine erweist es sich außerdem als vorteilhaft, wenn die der Gegendruckplatte zugewandte untere Bodenfläche der Kolben-Zylinder-Anordnung mittels in oder an ihr und/oder in oder an der Gegendruckplatte und der Stützplatte angeordneter rad- oder rollenartiger Elemente auf der Gegendruckplatte und der Stützplatte verfahren wird, wobei die rad- oder rollenartigen Elemente jeweils derart gehalten werden, daß die Kolben-Zylinder-Anordnung in ihrer Arbeitsposition zwischen Gegendruckplatte und verfahrbarer Formaufspannplatte auf die Gegendruckplatte aufsetzbar ist, weil das Ein- und Ausfahren der Kolben-Zylinder-Anordnung mit derartigen rad- oder rollenartigen Elementen von vornherein erheblich erleichtert wird und außerdem den Materialverschleiß an der Bodenfläche der Kolben-Zylinder-Anordnung sowie an der Grundplatte und der Stützplatte deutlich verringert - abgesehen davon, daß auch in diesem Falle die Verwendung von Antriebselementen geringerer Leistung und geringerer Kosten ermöglicht wird. Dabei können die rad- oder rollenartigen Elemente in vorteilhafter Weise entweder von hydraulischen oder pneumatischen Kolben-Zylinder-Einheiten mit vertikaler Längsachse oder von Federsystemen mit vertikaler Wirkungslinie in oder an der unteren Bodenfläche der Kolben-Zylinder-Anordnung und/oder in oder an der Gegendruckplatte und der Stützplatte gehalten werden, wobei die Federkraft bei alleiniger Belastung durch das Gewicht der Kolben-Zylinder-Anordnung zum Ausfahren der rad- oder rollenartigen Elemente ausreicht, bei der Betätigung des zuschaltbaren Kurzhubzylinders jedoch das Aufsetzen der Kolben-Zylinder-Anordnung auf der Gegendruckplatte gestattet, da in beiden vorgenannten Fällen sowohl ein leichtes Ein- und Ausfahren der Kolben-Zylinder-Anordnung als auch ihr eindeutiges Aufsetzen auf der Gegendruckplatte in der Arbeitsposition zwischen dieser und der verfahrbaren Formaufspannplatte sichergestellt wird.

Bei einer anderen Weiterbildung der vorliegenden Spritzgießmaschine ist es außerdem als sehr vorteilhaft anzusehen, daß die Gegendruckplatte und die Stützplatte und/oder die untere Bodenfläche der Kolben-Zylinder-Anordnung zusätzliche Führungselemente in Form von Schienen, Nuten oder Rollenbahnen aufweisen, die mit angepaßten Gegenelementen in Form von rad- oder rollenartigen Elementen, Nuten, Führungszapfen oder Abrollflächen zusammenwirken, weil damit eine sehr gute Seitenstabilität der horizontalen Ein- und Ausfahrbewegung erreicht wird, und zwar auch und gerade dann, wenn andererseits möglichst einfache und damit kostengünstige Antriebselemente innerhalb der Gesamtkonstruktion zur Anwendung kommen sollen. Dabei ergibt sich eine besonders gute Führung der Kolben-Zylinder-Anordnung bei einer Weiterbildung der in Rede stehenden Spritzgießmaschine, bei der in vorteilhafter Weise die Kolben-Zylinder-Anordnung in ihrem Bodenbereich über eine starre Verstrebung kraftschlüssig mit der Kolbenstange einer horizontal betätigbaren hydraulischen oder pneumatischen Kolben-Zylinder-Einrichtung verbunden ist, die auβerhalb des Zylinders von einem auf hinreichender Länge für den Durchlaß der starren Verstrebung geschlitzten Rohr hinreichender Glätte seiner Innenwand geführt wird, das horizontal in oder unter der Stützplatte und in der Gegendruckplatte angeordnet ist, da dies eine bekannte konstruktive Lösung für die Führung von oszillierend bewegten Elementen ist, die bei hoher Stabilität ein Minimum an Bauelementen - insbesondere von beweglichen Bauelementen - erfordert.

Als sehr vorteilhaft erweist sich bei einer weiteren Ausführungsform der erfindungsgemäßen Spritzgießmaschine auch, daß die untere Bodenfläche der Kolben-Zylinder-Anordnung taschenartige Ausnehmungen aufweist, in denen mindestens je eine Düse angeordnet ist, die über ein in der Kolben-Zylinder-Anordnung angeordnetes Leitungssystem mit einem unter hohem Druck stehenden gasförmigen Medium beaufschlagar ist, da auf diese Weise jegliche Reibung zwischen der unteren Bodenfläche der Kolben-Zylinder-Anordnung und der Gegendruckplatte bzw. der Stützplatte während der Ein- und Ausfahrbewegung vermieden wird, die Kolben-Zylinder-Anordnung aber in ihrer Arbeitsposition zwischen Gegendruckplatte und verfahrbarer Formaufspannplatte durch einfache Druckverminderung auf der Gegendruckplatte aufsetzbar ist. Dabei erweist es sich weiterhin - insbesondere aus Kosten- und Sicherheitsgründen - als sehr vorteilhaft, wenn als gasförmiges Medium hochkomprimierte Luft verwendet wird, weil eine solche Maßnahme lediglich die Installation eines Kompressors bekannter Art erfordert.

Eine besonders vorteilhafte Weiterbildung der vorliegenden Spritzgießmaschine liegt darüber hinaus vor, wenn die Kolben-Zylinder-Anordnung auf einer Transportplatte angeordnet und kraftschlüssig mit dieser verbunden ist, wobei die Unterseite der Transportplatte die untere Bodenfläche der Kolben-Zylinder-Anordnung ausbildet, insbesondere dann, wenn außerdem die kraftschlüssige Verbindung zwischen Kolben-Zylinder-Anordnung und Transportplatte lösbar ausgebildet ist, weil damit sowohl die Herstellung der gesamten Kolben-Zylinder-Anordnung als auch ihre Wartung wesentlich erleichtert wird, da insbesondere alle in oder an der Bodenfläche der Kolben-Zylinder-Anordnung zu verwirklichenden Merkmale der vorstehend erläuterten erfindungsgemäßen Spritzgießmaschine unabhängig von der eigentlichen Kolben-Zylinder-Anordnung installiert, ausgetauscht oder repariert werden können.

Ausführungsbeispiele der vorbeschriebenen Spritzgießmaschine mit vertikal verfahrbarer Schließeinheit sind in der Zeichnung dargestellt.

Es zeigen:

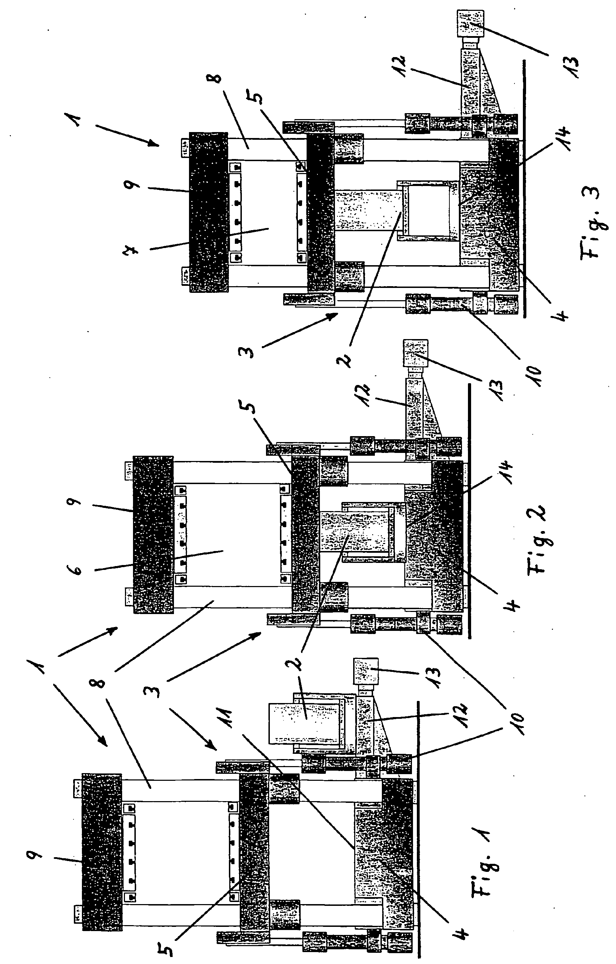

- Fig. 1:: Seitenansicht einer erfindungsgemäßen Spritzgießma- schine im Ausgangszustand mit hochgefahrener Formauf- spannplatte und in der Ruheposition außerhalb der Schließeinheit befindlicher Kolben-Zylinder-Anordnung in schematischer und teilweise durchbrochener Darstel- lung (Kolben-Zylinder-Anordnung geschnitten).
- Fig. 2:: Seitenansicht einer erfindungsgemäßen Spritzgießma- schine in Arbeitsposition der zwischen Gegendruck- platte und verfahrbare Formaufspannplatte eingefahre- nen Kolben-Zylinder-Anordnung bei maximaler Werkzeug- höhe in schematischer und teilweise durchbrochener Darstellung (Kolben-Zylinder-Anordnung geschnitten).
- Fig. 3:: Seitenansicht einer erfindungsgemäßen Spritzgießma- schine in Arbeitsposition der zwischen Gegendruck- platte und verfahrbare Formaufspannplatte eingefahre- nen Kolben-Zylinder-Anordnung bei minimaler Werkzeug- höhe in schematischer und teilweise durchbrochener Darstellung (Kolben-Zylinder-Anordnung geschnitten).

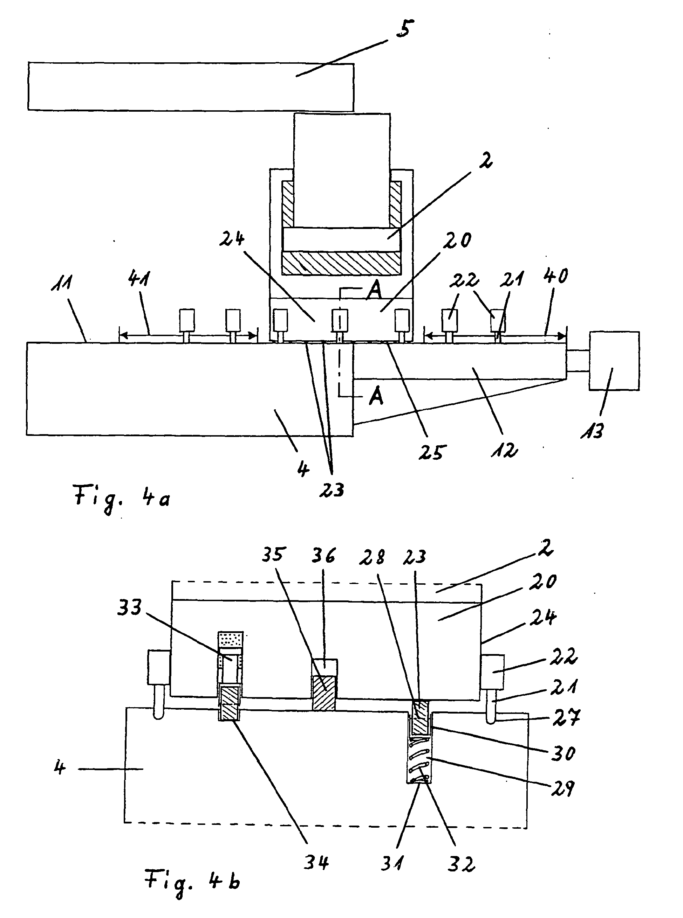

- Fig. 4a:: Seitenansicht einer Ausführungsform der Kolben Zylin- der-Anordnung einschließlich aller für ihre horizon- tale Ein- und Ausfahrbewegung notwendigen Elemente der Spritzgießmaschine in einer Position während der Ein- und Ausfahrbewegung in schematischer und teilweise durchbrochener Darstellung (Kolben-Zylinder-Anordnung) geschnitten.
- Fig. 4b;: Schnitt A - A aus Fig. 4a in schematischer Darstellung und geändertem Maßstab.

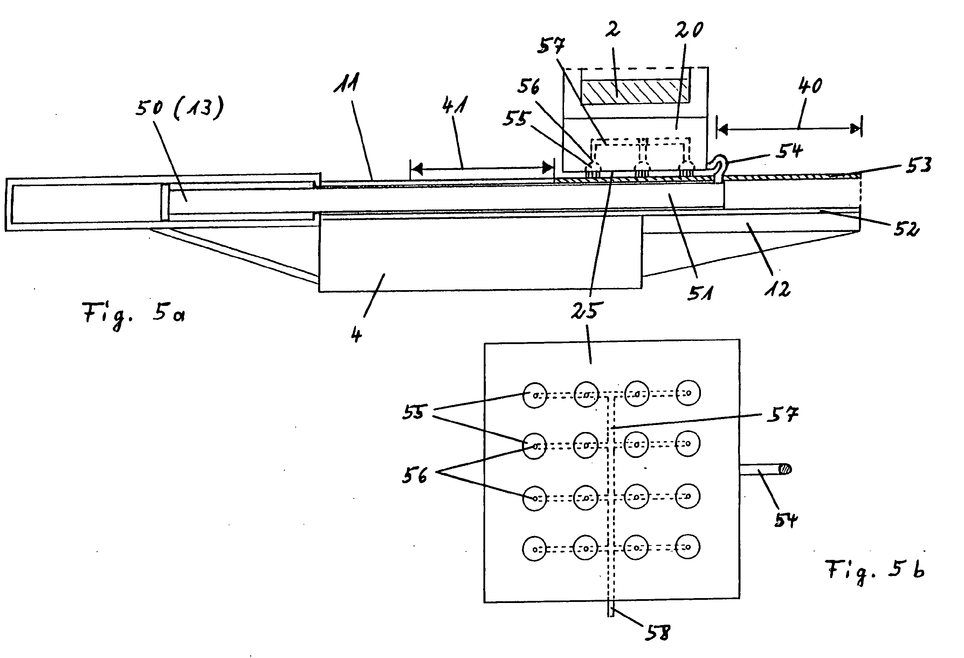

- Fig. 5a:: Seitenansicht einer weiteren Ausführungsform der Kol- ben-Zylinder-Anordnung in einer der Fig. 4a entspre- chenden Darstellungsform ohne ihren oberen Teil und die verfahrbare Formaufspannplatte.
- Fig. 5b:: Aufsicht auf die untere Bodenfläche der Kolben-Zylin- der-Anordnung der Fig. 5a in geändertem Maßstab.

Die Fig. 1, 2 und 3 zeigen jeweils in schematischer und teilweise durchbrochener Darstellung (Kolben-Zylinder-Anordnung geschnitten) die Seitenansicht einer erfindungsgemäßen Spritzgießmaschine 1 in verschiedenen Betriebszuständen, und zwar einmal im Ausgangszustand des neuartigen Teils jedes Schließzyklus, der dadurch charakterisiert ist, daß die für die Erzeugung des Schließdrucks erforderliche Kolben-Zylinder-Anordnung 2 aus der Schließeinheit 3 in eine außerhalb dieser befindliche Ruheposition 40 ausgefahren ist und die Werkzeughälften des Formwerkzeugs 6, 7 mittels der Fahrzylinder 10 bereits aus der minimal niedrigen Entnahmeposition für die erzeugten Artikel (Bedienhöhe h_{B}) aneinandergefahren sind, zum anderen in einer Arbeitsposition zwischen Gegendruckplatte 4 und verfahrbarer Formaufspannplatte 5, wenn das verwendete Formwerkzeug 6 die maximal mögliche Werkzeughöhe aufweist, und außerdem in einer Arbeitsposition zwischen Gegendruckplatte 4 und verfahrbarer Formaufspannplatte 5, wenn das verwendete Formwerkzeug 7 die minimal mögliche Werkzeughöhe besitzt. Des weiteren sind diesen Fig. 1 bis 3 in identischer Weise zwei von mindestens 3 Holmen 8, die einerseits kraftschlüssig mit der das Unterjoch bildenden Gegendruckplatte 4 und andererseits kraftschlüssig mit einer das Oberjoch bildenden feststehenden Formaufspannplatte 9 verbunden sind und auf denen die verfahrbare Formaufspannplatte 5 mittels mindestens eines - hier zweier sichtbarer - Fahrzylinder 10 in Form von langhubigen - vorzugsweise, aber nicht zwangsläufig hydraulischen - Kolben-Zylinder-Einheiten bekannter Art, deren feststehendes Ende jeweils an der Gegendruckplatte 4 und deren bewegliches Ende jeweils an der verfahrbaren Formaufspannplatte 5 angeschlagen ist, in vertikaler Richtung auf und ab bewegt wird, sowie eine die obere Deckfläche 11 der Gegendruckplatte 4 verlängernde Stützplatte 12 zur Aufnahme der Kolben-Zylinder-Anordnung 2 in deren Ruheposition zu entnehmen.

Die Antriebseinheit 13 für die horizontale Bewegung der Kolben-Zylinder-Anordnung 2 auf der Gegendruckplatte 4 und der Stützplatte 12 ist hier nur schematisch angedeutet und kann durch jede dem Fachmann bekannte Maßnahme verwirklicht werden, beispielsweise durch eine oder mehrere pneumatische oder hydraulische Kolben-Zylinder-Einheiten, durch einen oder mehrere elektromotorisch betätigte Spindelantriebe, durch einen oder mehrere elektromotorisch betätigte Zahnrad-Zahnstangen-Antriebe oder auch durch eine oder mehrere elektromotorisch betätigte Seilzug-, Ketten- oder Zahnriemenanordnungen. Ebenso wird hier auf eine explizite Darstellung der verwendeten Formwerkzeuge 6, 7 verzichtet, die in den Fig. 1 bis 3 nur durch den Nettoabstand zwischen der verfahrbaren Formaufspannplatte 5 und der feststehenden Formaufspannplatte 9 angedeutet sind, da es sich dabei um bekannte und im vorliegenden Fall nicht erfindungswesentliche Elemente handelt.

Bezüglich der Führung der Kolben-Zylinder-Anordnung 2 auf der Gegendruckplatte 4 und der Stützplatte 12 ist hier - ohne Beschränkung der Allgemeinheit - vorausgesetzt, daß in beiden vorgenannten Platten ein gemeinsames Flachbett 14 ausgebildet ist. Andere Führungselemente sind im Detail in den im weiteren beschriebenen Fig. 4a bis 5b dargestellt.

Die Fig. 4a und 4b zeigen dabei einerseits eine Seitenansicht einer Ausführungsform der Kolben-Zylinder-Anordnung 2 einschließlich aller für ihre horizontale Ein- und Ausfahrbewegung notwendigen Elemente der Spritzgießmaschine in einer Position während der Ein- oder Ausfahrbewegung in schematischer und teilweise durchbrochener Darstellung (Kolben-Zylinder-Anordnung geschnitten) und andererseits den Schnitt A - A aus Fig. 4a in ebenfalls schematischer Darstellung und geändertem Maßstab.

Dabei läßt die Fig. 4a gegenüber den Fig. 1 bis 3 insbesondere eine Transportplatte 20, auf der die ursprüngliche Kolben-Zylinder-Anordnung 2 angeordnet und mit der letzteren kraftschlüssig - aber vorzugsweise lösbar - verbunden ist, eine Reihe von um vertikale und in der Gegendruckplatte 4 sowie in der Stützplatte 12 gelagerte Achsen 21 rotierbare rad- oder rollenartige Elemente 22 sowie weitere, um horizontale und senkrecht zur Zeichenebene gelagerte Achsen rotierbare rad- oder rollenartige Elemente 23 erkennen. Elemente, die mit bereits in den Fig. 1 bis 3 verwendeten Bezugszeichen charakterisiert werden, offenbaren identische Elemente oder solche gleicher Wirkungsweise wie dort. Dasselbe gilt zukünftig auch bezüglich der Fig. 4b bis 5b hinsichtlich der jeweils vorangegangenen.

Außerdem ist in der Fig. 4a die Ruheposition der Kolben-Zylinder-Anordnung 2 außerhalb der Schließeinheit 3 durch den symbolischen Pfeil 40 und ihre Arbeitsposition zwischen Gegendruckplatte 4 und verfahrbarer Formaufspannplatte 5 durch den symbolischen Pfeil 41 gekennzeichnet.

Die Transportplatte 20 dient in erster Linie dazu, alle für die Erleichterung der Aus- und Einfahrbewegung der Kolben-Zylinder-Anordnung 2, d.h. insbesondere zur Verminderung der Reibung zwischen Kolben-Zylinder-Anordnung 2 einerseits und Gegendruckplatte 4 sowie Stützplatte 12 andererseits, erforderlichen Maßnahmen nicht unmittelbar an der Kolben-Zylinder-Anordnung 2 vornehmen zu müssen, sondern möglichst unabhängig von dieser durchführen zu können, so daß die Vervollständigung der Gesamtanordnung nach - separater - Fertigstellung (oder Wartung oder Reparatur) der Transportplatte 20 nur noch die Herstellung einer - vorzugsweise lösbaren - kraftschlüssigen Verbindung zwischen Kolben-Zylinder-Anordnung 2 und Transportplatte 20 erfordert. Diese Verbindung selbst ist in der vorliegenden Darstellung der Fig. 4a allerdings nicht explizit offenbart worden, da sie einerseits dem Fachmann bekannt ist und andererseits nur die Übersichtlichkeit der Zeichnung vermindern würde.

Die rad- oder rollenartigen Elemente 22 bilden gemeinsam mit jeder parallel zur Ein- und Ausfahrbewegung der Kolben-Zylinder-Anordnung 2 ausgerichteten Seitenwand von dieser oder der zugehörigen Transportplatte 20 (hier ist nur die vordere dieser Seitenwände und die dazugehörige Reihe der rad- und rollenartigen Elemente 22 sichtbar) eine seitliche Führung der Kolben-Zylinder-Anordnung 2 für die Ein- und Ausfahrbewegung in der Weise aus, daß die jeweilige Seitenwand eine Abrollfläche 24 für die jeweilige Reihe von rad- oder rollenartigen Elementen 22 zur Verfügung stellt. Die Art, Zahl und Anordnung der rad- oder rollenartigen Elemente 22 innerhalb einer Reihe ist dabei selbstverständlich nicht durch die vorliegende Fig. 4a festgelegt, sondern liegt im Belieben des Fachmanns.

Die rad- oder rollenartigen Elemente 23 dienen während der Einund Ausfahrbewegung der Kolben-Zylinder-Anordnung 2 (einschließlich der Transportplatte 20) auf jeden Fall der Verminderung der Reibung zwischen Kolben-Zylinder-Anordnung 2 bzw. Transportplatte 20 einerseits und der Gegendruckplatte 4 sowie der Stützplatte 12 andererseits und bilden dabei zumindest eine Führung der unteren Bodenfläche 25 der Kolben-Zylinder-Anordnung 2 bzw. der Transportplatte 20 in ausreichendem Abstand oberhalb der oberen Deckfläche 11 der Gegendruckplatte 4 bzw. der Stützplatte 12 aus. Vorteilhafterweise wird die jeweilige Halterung der rad- oder rollenartigen Elemente 23 dabei so ausgeführt, daß die untere Bodenfläche 25 in der Arbeitsposition zwischen Gegendruckplatte 4 und verfahrbarer Formaufspannplatte 5 auf die Gegendruckplatte 4 aufsetzbar ist - wie in der folgenden Fig. 4b im einzelnen zu erkennen ist.

In der Fig. 4b sind neben der vollständigen seitlichen Führung der Kolben-Zylinder-Anordnung 2 durch die Kombination von zwei Reihen von rad- oder rollenartigen Elementen 22, deren Achsenlagerung 27 hier - da grundsätzlich bekannt - nur schematisch angedeutet ist, mit den Abrollflächen 24 der Transportplatte 20 weitere mögliche Führungselemente bezüglich der Ein- und Ausfahrbewegung der Kolben-Zylinder-Anordnung 2 dargestellt, die in der Praxis sicher nicht in der dargestellten Vielfalt in einer einzigen Spritzgießmaschine zur Anwendung kommen werden, hier jedoch einerseits zur Reduzierung der Zahl von Zeichnungen und andererseits für eine zusammenfassende Übersicht der Möglichkeiten in einer Abbildung zusammengefaßt worden sind.

Die bereits im Zusammenhang mit der Fig. 4a angeführte Führung der unteren Bodenfläche 25 in vorgegebenem Abstand, für den eine Größenordnung von 0,1 mm ≤ a ≤ 5 mm als durchaus ausreichend anzusehen sein wird, oberhalb der oberen Deckfläche 11 ist beispielsweise mit der im rechten Bereich der Fig. 4b offenbarten Anordnung aus einem rad- oder rollenartigen Element 23, dessen Achse 28 von einer in einem in die Gegendruckplatte 4 bzw. Stützplatte 12 eingebrachten Schacht 29 geführten Halterung 30 getragen wird, die ihrerseits auf ihrer dem Element 23 abgekehrten Seite mit einem sich gegen den Schachtgrund 31 abstützenden mechanischen Federsystem 32 in Wirkverbindung steht, realisierbar. Dabei ist die Federkraft - zumindest im Bereich der Arbeitsposition (s. Pfeil 41 in Fig. 4a) - so einstellbar, daß sie bei alleiniger Belastung durch das Gewicht der Kolben-Zylinder-Anordnung 2 einschließlich der Transportplatte 20 den vorgenannten Abstand aufrechterhält, bei der Erzeugung des Schließdrucks durch die Kolben-Zylinder-Anordnung 2 jedoch deren Aufsetzen auf die Gegendruckplatte 4 gestattet. Selbstverständlich kann diese Anordnung auch in der Transportplatte 20 installiert werden und dann auf der oberen Deckfläche 11 abrollen.

Eine weitere mögliche Anordnung sowohl der Führung der unteren Bodenfläche 25 im Abstand zur oberen Deckfläche 11 als auch zur seitlichen Führung ist im linken Bereich der vorliegenden Fig. 4b dargestellt. Hier ist einerseits der wesentliche Teil der Anordnung in der Transportplatte 20 untergebracht, was natürlich ohne Beschränkung der Allgemeinheit ebenfalls in der Gegendruckplatte 4 und der Stützplatte 12 erfolgen könnte, und andererseits das mechanische Federsystem 32 durch eine pneumatische oder hydraulische Kolben-Zylinder-Einheit 33 ersetzt worden. Darüber hinaus läuft das rad- oder rollenartige Element 23 in einer in der oberen Deckfläche 11 angeordneten Nut 34, die bei anderer Unterbringung (s.o.) selbstverständlich auch in der Transportplatte 20 angeordnet werden kann.

Selbstverständlich können jeweils mehrere der vorgenannten Anordnungen von rad- oder rollenartigen Elementen 23 auch zu fortlaufenden Rollenbahnen zusammengefaßt werden, die dann gemeinsam mit ihrem jeweiligen rückwärtigen mechanischen Federsystem oder einer oder mehreren pneumatischen oder hydraulischen Kolben-Zylinder-Einheiten als ein- oder mehrteilige Einsätze in entsprechend dimensionierten Ausnehmungen in der Transportplatte 20 oder der Gegendruckplatte 4 bzw. der Stützplatte 12 montierbar sind.

Eine reine seitliche Führung der Ein- und Ausfahrbewegung der Kolben-Zylinder-Anordnung 2 läßt sich auch mit der im mittleren Bereich der vorliegenden Fig. 4b gezeigten Anordnung erzielen, bei der eine auf der oberen Deckfläche 11 angeordnete Schiene 35 in eine in die Transportplatte 20 eingebrachte Nut 36 eingreift, wobei die Höhe der Schiene 35 derart mit der Tiefe der Nut 36 abgestimmt ist, daß die Anordnung aus beiden zumindest im Bereich der Arbeitsposition (s. Pfeil 41 in Fig. 4a) das Absenken der Kolben-Zylinder-Anordnung 2 auf die Gegendruckplatte 4 gestattet. Selbstverständlich kann die Schiene 35 auch an der Transportplatte 20 angeordnet und die Nut 36 in die Gegendruckplatte 4 eingebracht werden. Darüber hinaus kann die Schiene 35 auch durch mehrere einzelne Führungszapfen ersetzt werden, ohne daß das Ziel der Seitenstabilisierung verfehlt wird. Art, Zahl und Anordnung solcher Führungszapfen liegt dabei im Belieben des Fachmanns. Gleiches gilt selbstverständlich auch für beliebige Kombinationen aller vorstehend aufgeführten Führungselemente für die horizontale Ein- und Ausfahrbewegung einer Kolben-Zylinder-Anordnung 2.

Die Fig. 5a und 5b zeigen einerseits die Seitenansicht einer weiteren Ausführungsform der Kolben-Zylinder-Anordnung in einer der Fig. 4a entsprechenden Darstellungsform ohne ihren oberen Teil und die verfahrbare Formaufspannplatte sowie andererseits eine Aufsicht auf die untere Bodenfläche 25 der Kolben-Zylinder-Anordnung 2 bzw. deren Transportplatte 20 der Fig. 5a in geändertem Maßstab.

Im Unterschied zu früheren Abbildungen offenbart die Fig. 5a als Antriebseinheit 13 explizit eine - vorzugsweise hydraulische - Kolben-Zylinder-Einrichtung 50 mit horizontaler Wirkungslinie, die im vorliegenden - allerdings nicht zwangsläufigen - Fall auf der der durch den symbolischen Pfeil 40 gekennzeichneten Ruheposition der Kolben-Zylinder-Anordnung 2 gegenüberliegenden Seite der Gegendruckplatte 4 angeordnet ist. Ihre - verlängerte - Kolbenstange 51 wird unmittelbar unter der oberen Deckfläche 11 von Gegendruckplatte 4 und Stützplatte 12 in einem Rohr 52 mit hinreichender Glätte seiner Innenwand geführt, wobei dieses Rohr 52 auf einer ausreichenden Länge zwischen Ruheposition 40 und Arbeitsposition 41 als in seiner obersten Längslinie geschlitztes Rohr 53 ausgeführt ist, um hier eine weitgehend starre Verstrebung 54 zwischen Kolben-Zylinder-Anordnung 2 bzw. Transportplatte 20 und Kolbenstange 51 frei beweglich hindurchzulassen. Die starre Verbindung 54 ist dabei so ausgebildet, daß sie eine exakte Längsführung der Kolben-Zylinder-Anordnung 2 darstellt, gleichzeitig jedoch ein geringfügiges Anheben der unteren Bodenfläche 25 gegenüber der oberen Deckfläche 11 gestattet, so daß eine möglichst reibungsfreie Ein- und Ausfahrbewegung der Kolben-Zylinder-Anordnung 2 ermöglicht wird. Von der Kolben-Zylinder-Einrichtung 50 ist hier im übrigen vorausgesetzt, daß sie - wie alle übrigen vorstehend angeführten Kolben-Zylinder-Elemente - beidseitig beaufschlagbar ist und über Leitungssysteme bekannter Art mit der jeweiligen Quelle eines fluiden Mediums verbunden ist. Auf eine explizite Darstellung solcher Leitungssysteme ist daher bisher stets verzichtet worden.

Mit dieser Anordnung wird die Ein- und Ausfahrbewegung der Kolben-Zylinder-Anordnung 2 nicht nur bewirkt, sondern gleichzeitig seitenstabil geführt - und das bei einem minimalen Einsatz beweglicher Teile. Dafür muß allerdings eine verhältnismäßig große Länge der gesamten Antriebs- und Führungsanordnung in Kauf genommen werden - unabhängig davon, ob die Kolben-Zylinder-Einrichtung 50 bezüglich der Gegendruckplatte 4 auf der gegenüberliegenden Seite der Ruheposition 40 (wie dargestellt) oder auf derselben Seite wie diese angeordnet ist.

Darüber hinaus offenbart die Fig. 5a eine weitere Möglichkeit zur Verringerung der Reibung zwischen Kolben-Zylinder-Anordnung 2 bzw. Transportplatte 20 und der Gegendruckplatte 4 bzw. Stützplatte 12, indem die untere Bodenfläche 25 der Transportplatte 20 mit taschenartigen Ausnehmungen 55 versehen ist, in denen mindestens je eine -Düse 56 angeordnet ist, die über ein in der Kolben-Zylinder-Anordnung 2 bzw. in der Transportplatte 20 angeordnetes Leitungssystem 57 mit einem unter hohem Druck stehenden gasförmigen Medium, vorzugsweise hochkomprimierter Luft, beaufschlagbar ist. Eine mögliche Anordnung solcher taschenartiger Ausnehmungen 55 in der unteren Bodenfläche 25 zeigt die Fig. 5b, wobei selbstverständlich sowohl die Form als auch die Anordnung der taschenartigen Ausnehmungen 55 abgeändert werden kann, wenn dies dem Fachmann geboten erscheint. Außerdem zeigt die Fig. 5b eine Anschlußarmatur 58, über die das Leitungssystem 57 an eine externe - vorzugsweise flexible - Zuleitung für das gasförmige Medium anschließbar ist.

Das vorliegende Patentbegehren bezieht sich selbstverständlich nicht nur auf die vorstehend explizit erläuterten Ausführungsbeispiele der ihm zugrundeliegenden erfinderischen Idee, sondern auf alle denkbaren Ausführungsformem dieser Idee, die von dem Schutzumfang des nachfolgenden Patentanspruchs 1 erfaßt werden.

### Bezugszeichenliste

- 1: Spritzgießmaschine
- 2: Kolben-Zylinder-Anordnung
- 3: Schließeinheit
- 4: Gegendruckplatte
- 5: verfahrbare Formaufspannplatte
- 6, 7: Formwerkzeug
- 8: Holme
- 9: feststehende Formaufspannplatte
- 10: Fahrzylinder
- 11: obere Deckfläche
- 12: Stützplatte
- 13: Antriebseinheit
- 14: Flachbett
- 20: Transportplatte
- 21,28: Achsen
- 22,23: rad- oder rollenartige Elemente
- 24: Abrollfläche
- 25: untere Bodenfläche
- 27: Achsenlagerung
- 29: Schacht
- 30: Halterung
- 31: Schachtgrund
- 32: mechanisches Federsystem
- 33: Kolben-Zylinder-Einheit
- 34,36: Nuten
- 35: Schiene
- 40: symbolischer Pfeil für die Ruheposition
- 41: symbolischer Pfeil für die Arbeitsposition
- 50: Kolben-Zylinder-Einrichtung
- 51: Kolbenstange
- 52: Rohr
- 53: geschlitztes Rohr
- 54: starre Verstrebung
- 55: taschenartige Ausnehmungen
- 56: Düsen
- 57: Leitungssystem
- 58: Anschlußarmatur

## Patentansprüche

1. Spritzgießmaschine (1) mit vertikal verfahrbarer Schließeinheit (3), die ein plattenartiges Unterjoch als Gegendruckplatte (4), ein plattenartiges Oberjoch als feststehende Formaufspannplatte (9), mindestens drei vertikal ausgerichtete Holme (8), die Unter- und Oberjoch in deren Randbereichen kraftschlüssig miteinander verbinden, sowie ein weiteres plattenartiges Element als verfahrbare Formaufspannplatte (5) aufweist, die mittels eines oder mehrerer an ihr und der Gegendruckplatte (4) angeschlagener Fahrzylinder (10) kleinen Querschnitts und großer Hublänge derart auf den Holmen (8) verfahrbar ist, dass zwei aneinander zugekehrten Flächen der Formaufspannplatten (5, 9) angeordnete ein- oder mehrteilige Werkzeughälften (6, 7) aus einem maximalen Abstand in eine gegenseitige Anlage umgekehrt bringbar sind, wobei in der Anlagestellung ein ebenfalls zwischen Gegendruckplatte (4) und verfahrbarer Formaufspannplatte (5) wirksamer Kurzhubzylinder (2) größeren Querschnitts zwecks Erzeugung des erforderlichen Schließdrucks zuschaltbar ist,
**dadurch gekennzeichnet,**
**dass** der zuschaltbare Kurzhubzylinder (2) eine in der Anlagestellung aus dem Außenraum der Schließeinheit (3) in horizontaler Richtung zwischen Gegendruckplatte (4) und verfahrbare Formaufspannplatte (5) ein- und ausfahrbare, mit einem fluiden Medium beaufschlagbare Kolben-Zylinder-Anordnung (2) ist, die neben dem kurzfristig mit einem fluiden Medium füll- und entleerbaren Hubvolumen zu Erzeugung des Kurzhubs ein weiteres Vorspannvolumen aufweist, dass in willkürlichen größeren Zeitintervallen mit unterschiedlichen Mengen des fluiden Mediums beaufschlagbar ist, um die Ausgangshöhe der Kolben-Zylinder-Anordnung (2) für den Kurzhubbetrieb an unterschiedliche Werkzeughöhen (6, 7) anpassen zu können.

2. Spritzgießmaschine nach Anspruch 1,
**dadurch gekennzeichnet,**
**daß** Hubvolumen und Vorspannvolumen einen gemeinsamen Raum ausbilden.

3. Spritzgießmaschine nach Anspruch 2,
**dadurch gekennzeichnet,**
**daß** die Definition des Hubvolumens durch die Steuerung der zuund abfließenden Menge von fluidem Medium zur Erzeugung des Kurzhubs erfolgt.

4. Spritzgießmaschine nach einem der Ansprüche 1 bis 3,
**dadurch gekennzeichnet,**
**daß** als fluides Medium Hydraulikflüssigkeit bekannter Art verwendet wird.

5. Spritzgießmaschine nach einem der Ansprüche 1 bis 4,
**dadurch gekennzeichnet,**
**daß** die Kolben-Zylinder-Anordnung (2) mittels einer oder mehrerer, mit einem fluiden Medium beaufschlagbarer Kolben-Zylinder-Einheiten (50) mit horizontaler Längsachse in die Schließeinheit (3) ein- und ausfahrbar ist.

6. Spritzgießmaschine nach einem der Ansprüche 1 bis 4,
**dadurch gekennzeichnet,**
**daß** die Kolben-Zylinder-Anordnung (2) mittels eines oder mehrerer, elektromotorisch betätigter Spindelantriebe mit horizontaler Längsachse in die Schließeinheit (3) ein- und ausfahrbar.

7. Spritzgießmaschine nach einem der Ansprüche 1 bis 4,
**dadurch gekennzeichnet,**
**daß** die Kolben-Zylinder-Anordnung (2) mittels eines oder mehrerer, elektromotorisch betätigter Zahnrad-Zahnstangen-Antriebe mit horizontaler Längsachse in die Schließeinheit (3) ein- und ausfahrbar ist.

8. Spritzgießmaschine nach einem der Ansprüche 1 bis 7,
**dadurch gekennzeichnet,**
**daß** die der Gegendruckplatte (4) zugewandte untere Bodenfläche (25) der Kolben-Zylinder-Anordnung (2) unmittelbar auf der Gegendruckplatte (4) und einer deren obere Deckfläche (11) verlängernden Stützplatte (12) verfahrbar ist.

9. Spritzgießmaschine nach Anspruch 8,
**dadurch gekennzeichnet,**
**daß** der Bereich der Gegendruckplatte (4) und der Stützplatte (12), der von der unteren Bodenfläche (25) der Kolben-Zylinder-Anordnung (2) berührt wird, als Flachbett (14) ausgebildet ist.

10. Spritzgießmaschine nach Anspruch 8 oder 9,
**dadurch gekennzeichnet,**
**daß** mindestens der Bereich der Gegendruckplatte (4) und der Stützplatte (12), der von der unteren Bodenfläche (25) der Kolben-Zylinder-Anordnung (2) berührt wird, und/oder die untere Bodenfläche (25) der Kolben-Zylinder-Anordnung (2) zur Erniedrigung des Reibungs-Koeffizienten oberflächenbehandelt ist.

11. Spritzgießmaschine nach einem der Ansprüche 8 bis 10,
**dadurch gekennzeichnet,**
**daß** in den Bereich zwischen Gegendruckplatte (4) und Stützplatte (12) einerseits und unterer Bodenfläche (25) der Kolben-Zylinder-Anordnung (2) andererseits kontinuierlich oder diskontinuierlich ein Schmiermittel einbringbar ist.

12. Spritzgießmaschine nach einem der Ansprüche 1 bis 7,
**dadurch gekennzeichnet,**
**daß** die der Gegendruckplatte (4) zugewandte untere Bodenfläche (25) der Kolben-Zylinder-Anordnung (2) mittels in oder an ihr und/oder in oder an der Gegendruckplatte (4) und der Stützplatte (12) angeordneter rad- oder rollenartiger Elemente (22,23) auf der Gegendruckplatte (4) und der Stützplatte (12) verfahren wird, wobei die rad- oder rollenartigen Elemente (22,23) jeweils derart gehalten werden, daß die Kolben-Zylinder-Anordnung (2) in ihrer Arbeitsposition zwischen Gegendruckplatte (4) und verfahrbarer Formaufspannplatte (5) auf die Gegendruckplatte (4) aufsetzbar ist.

13. Spritzgießmaschine nach Anspruch 12,
**dadurch gekennzeichnet,**
**daß** die rad- oder rollenartigen Elemente (23) von hydraulischen oder pneumatischen Kolben-Zylinder-Einheiten (33) mit vertikaler Längsachse in oder an der unteren Bodenfläche (25) der Kolben-Zylinder-Anordnung (2) und/oder in oder an der Gegendruckplatte (4) und der Stützplatte (12) gehalten werden.

14. Spritzgießmaschine nach Anspruch 12,
**dadurch gekennzeichnet,**
**daß** die rad- oder rollenartigen Elemente (23) von Federsystemen (32) mit vertikaler Wirkungslinie in oder an der unteren Bodenfläche (25) der Kolben-Zylinder-Anordnung (2) und/oder in oder an der Gegendruckplatte (4) und der Stützplatte (12) gehalten werden, deren Federkraft bei alleiniger Belastung durch das Gewicht der Kolben-Zylinder-Anordnung (2) zum Ausfahren der rad- oder rollenartigen Elemente (23) ausreicht, bei der Betätigung des zuschaltbaren Kurzhubzylinders jedoch das Aufsetzen der Kolben-Zylinder-Anordnung (2) auf der Gegendruckplatte (4) gestattet.

15. Spritzgießmaschine nach einem der Ansprüche 8 bis 14,
**dadurch gekennzeichnet,**
**daß** die Gegendruckplatte (4) und die Stützplatte (12) und/oder die untere Bodenfläche (25) der Kolben-Zylinder-Anordnung (2) zusätzliche Führungselemente in Form von Schienen (35), Nuten (34,36) oder Rollenbahnen (22,23) aufweisen, die mit angepaßten Gegenelementen in Form von rad- oder rollenartigen Elementen (22,23), Nuten(34,36), Führungszapfen oder Abrollflächen (24) zusammenwirken.

16. Spritzgießmaschine nach einem der Ansprüche 8 bis 15,
**dadurch gekennzeichnet,**
**daß** die Kolben-Zylinder-Anordnung (2) in ihrem Bodenbereich über eine starre Verstrebung (54) kraftschlüssig mit der Kolbenstange (51) einer horizontal betätigbaren hydraulischen oder pneumatischen Kolben-Zylinder-Einrichtung (50) verbunden ist, die außerhalb des Zylinders von einem auf hinreichender Länge für den Durchlaß der starren Verstrebung (54) geschlitzten Rohr (52,53) hinreichender Glätte seiner Innenwand geführt wird, das horizontal in oder unter der Stützplatte (12) und in der Gegendruckplatte (4) angeordnet ist.

17. Spritzgießmaschine nach Anspruch 8, 9 oder 15,
**dadurch gekennzeichnet,**
**daß** die untere Bodenfläche (25) der Kolben-Zylinder-Anordnung (2) taschenartige Ausnehmungen (55) aufweist, in denen mindestens je eine Düse (56) angeordnet ist, die über ein in der Kolben-Zylinder-Anordnung (2) angeordnetes Leitungssystem (57) mit einem unter hohem Druck stehenden gasförmigen Medium beaufschlagar ist.

18. Spritzgießmaschine nach Anspruch 17,
**dadurch gekennzeichnet,**
**daß** als gasförmiges Medium hochkomprimierte Luft verwendet wird.

19. Spritzgießmaschine nach einem der Ansprüche 8 bis 18,
**dadurch gekennzeichnet,**
**daß** die Kolben-Zylinder-Anordnung (2) auf einer Transportplatte (20) angeordnet und kraftschlüssig mit dieser verbunden ist, wobei die Unterseite der Transportplatte (20) die untere Bodenfläche (25) der Kolben-Zylinder-Anordnung (2) ausbildet.

20. Spritzgießmaschine nach Anspruch 19,
**dadurch gekennzeichnet,**
**daß** die kraftschlüssige Verbindung zwischen Kolben-Zylinder-Anordnung (2) und Transportplatte (20) lösbar ausgebildet ist.

## Claims

1. Injection molding machine (1) with a vertically displaceable locking unit (3), that is connected by a plate-like lower brace as counter pressure plate (4), a plate-like upper brace as stationary platen (9), at least three vertically aligned arbors (8), that connect the upper brace and the lower brace with each other at their edge sections force-fit, as well an additional plate-like element as displaceable platen (5), that is displaceable on the arbors (8) by means of one or more drive cylinders (10) attached to it and the counter-pressure plate (4) having a small cross section and large stroke length in such a way, that single part or multipart tool halves (6, 7) of two surfaces facing each other of the platen (5, 9) can be brought from a maximum distance into a reciprocal abutment in reverse, whereby in the abutting position, a likewise displaceable - between the counter-pressure plate (4) and platen (5) - working short stroke cylinder (2) with a larger cross section for the purpose of generating the required locking pressure can be, activated
**characterized by**,
that the short stroke cylinder (2) that can be activated is a piston cylinder arrangement that can be charged with a fluid medium and can be driven in and out of the outer space of the locking unit (3) in horizontal direction between the counter-pressure plate (4) and the displaceable platen (5) in abutting position, that has a further pretensioning volume in addition to that displaced volume, which can be rapidly filled and emptied with a fluid medium that can be charged at arbitrary larger intervals of time with different amounts of the fluid medium, in order to be able to adapt the initial level of the piston cylinder arrangement (2) to different tool heights (6, 7) for the short stroke operation.

2. Injection molding machine according to claim 1,
**characterized by**,
that the displaced volume and the pre-tensioned volume form a joint volume.

3. Injection molding machine according to claim 2,
**characterized by**,
that the definition of the displaced volume occurs by means of the control of the inflowing and out-flowing amount of fluid medium for creating the short stroke.

4. Injection molding machine according to one of claims 1 to 3,
**characterized by**,
that a hydraulic fluid of known type is used as fluid medium.

5. Injection molding machine according to one of claims 1 to 4,
**characterized by**,
that the piston cylinder arrangement (2) can be driven in and out of the locking unit (3) by means of one or more piston cylinder units (50) with horizontal longitudinal axis that can be charged with a fluid medium.

6. Injection molding machine according to one of claims 1 to 4,
**characterized by**,
that the piston cylinder arrangement (2) can be driven into and out of the locking unit (3) by means of one or more electro-mechanically actuated spindle drives with horizontal longitudinal axis.

7. Injection molding machine according to one of claims 1 to 4,
**characterized by**,
that the piston cylinder arrangement (2) can be driven into or out of the locking unit (3) by means of one or more electro-mechanically actuated gear wheel-gear rod drives with horizontal longitudinal axis.

8. Injection molding machine according to one of claims 1 to 7,
**characterized by**,
that the bottom surface (25) facing the counter-pressure plate (4) of piston cylinder arrangement (2) can be displaced directly on the counter-pressure plate (4) and on one of its support plates (12) that extends its upper cover surface (11).

9. Injection molding machine according to claim 8,
**characterized by**,
that the section of the counter-pressure plate (4) and the support plate (12) that comes in contact with the lower bottom surface (25) of the piston cylinder arrangement (2), is designed as flat bed (14).

10. Injection molding machine according to claim 8 or 9,
**characterized by**,
that at least one of the sections of the counter-pressure plate (4) and the support plate (12) that comes in contact with the lower bottom surface (25) of the piston cylinder arrangement (2), and/or the lower bottom surface (25) of the piston cylinder arrangement (2) is surface-treated to lower the friction coefficient.

11. Injection molding machine according to one of claims 8 to 10,
**characterized by**,
that in the section between the counter-pressure plate (4) and the support plate (12) on the one hand, and the lower bottom surface (25) of the piston cylinder arrangement (2) on the other hand, a lubricant can be inserted continuously or discontinuously.

12. Injection molding machine according to one of claims 1 to 7,
**characterized by**,
that the lower bottom surface (25) that is facing the counter-pressure plate (4) of the piston cylinder arrangement (2) is displaced by means of wheel or roll-like elements (22, 23) that are mounted in it or on it and/or in or on the counter-pressure plate (4) and the support plate (12), on the counter-pressure plate (4) and the support plate (12), whereby the wheel-like or roll-like elements (22, 23) are respectively retained in such a way that the piston cylinder arrangement (2) can be placed onto counter pressure plate (4) in its working position between the counter pressure plate (4) and the displaceable platen (5).

13. Injection molding machine according to claim 12,
**characterized by**,
that the wheel-like or roll-like elements (23) are retained by hydraulic or pneumatic piston cylinder units (33) with vertical longitudinal axis in or at the lower bottom surface (25) of the piston cylinder arrangement (2) and/or in or at the counter pressure plate (4) and the support plate (12).

14. Injection molding machine according to claim 12,
**characterized by**,
that the wheel-like and roll-like elements (23) of spring systems (32) are retained with vertical line of action in or at the lower bottom surface (25) of the piston cylinder arrangement (2) and/or in or at the counter pressure plate (4) and the support plate (12), the spring force of which is sufficient - in the case of a sole load of the weight of the piston cylinder arrangement (2) - for driving out the wheel-like or roll-like
elements (23), however, when the short stroke cylinder that can be activated is actuated, it allows placing the piston cylinder arrangement (2) onto counter pressure plate (4).

15. Injection molding machine according to one of claims 8 to 14,
**characterized by**,
that the counter-pressure plate (4) and the support plate (12) and/or the lower bottom surface (25) of the piston cylinder arrangement (2) are provided with additional guide elements in the form of tracks (35), slots (34, 36) or running surfaces (22, 23), that work together with adapted counter elements in the form of wheel-like or roll-like elements (22, 23), slots (34, 36), guide pins or roll-off surfaces (24).

16. Injection molding machine according to one of claims 8 to 15,
**characterized by**,
that the piston cylinder arrangement (2) is connected force-fit in its bottom section by a steep cross beam (54) with the piston rod (51) of a hydraulic and pneumatic piston cylinder unit (50), which can be actuated horizontally, that is guided exterior to the cylinder by a pipe (52, 53) that is slit for a sufficient length allowing the admission of the steep cross beam (54), which has a sufficient smoothness of its interior wall that is located horizontal in, or under the support plate (12) and in the counter-pressure plate (4).

17. Injection molding machine according to claim 8, 9 or 15,
**characterized by**,
that the lower bottom surface (25) of the piston cylinder arrangement (2) is provided with pocket-like recesses (55) in each of which at least one nozzle (56) is mounted, that can be charged by a hose system (57) containing a gaseous medium under high pressure that is mounted to the piston cylinder arrangement (2).

18. Injection molding machine according to claim 17,
**characterized by**,
that highly compressed air is used as gaseous medium.

19. Injection molding machine according to one of claims 8 to 18,
**characterized by**,
that the piston cylinder arrangement (2) is mounted on a transport plate (20) and is connected force-fit with such, whereby the underside of the transport plate (20) forms the lower bottom surface (25) of the piston cylinder arrangement (2).

20. Injection molding machine according to claim 19,
**characterized by**, that the positively tied connection between piston cylinder arrangement (2) and transport plate (20) is designed detachable.

## Revendications

1. Machine de moulage par injection (1), comportant une unité de fermeture (3) mobile verticalement, qui comporte un châssis inférieur de type plateau formant un plateau de contre-pression (4), un châssis supérieur de type plateau formant un plateau de fixation du moule (9) immobile, au moins trois longerons (8) orientés verticalement, qui relient le châssis inférieur et le châssis supérieur entre eux par conjugaison de forces dans leurs zones d'extrémité, ainsi qu'un autre élément de type plateau formant un plateau de fixation du moule (5) mobile qui, au moyen d'un ou de plusieurs vérins de déplacement (10) à petite section et longue course, attachés à ce dernier et au plateau de contre-pression (4), est apte à être déplacé sur les longerons (8), de telle sorte que des moitiés de moule (6, 7) en une ou plusieurs parties, disposées sur deux surfaces orientées l'une vers l'autre des plateaux de fixation du moule (5, 9), peuvent être amenées à partir d'un écartement maximum vers une position en appui l'une contre l'autre et inversement, sachant que, dans la position en appui, un vérin (2) à faible course et à plus grande section, agissant entre le plateau de contre-pression (4) et le plateau de fixation du moule (5) mobile, peut être mis en service en vue de générer la pression de fermeture nécessaire,
**caractérisée en ce que** le vérin (2) à faible course, apte à être mis en service en plus, est un système à cylindre et piston (2) apte à être sollicité par un milieu fluide, lequel, dans la position en appui, peut être déplacé dans la direction horizontale depuis l'extérieur de l'unité de fermeture (3) vers l'intérieur de celle-ci entre le plateau de contre-pression (4) et le plateau de fixation du moule (5) mobile et inversement et lequel, outre le volume de levage pouvant être rempli et purgé pendant une courte durée par un milieu fluide pour générer la faible course, comporte un volume de précontrainte qui, dans des intervalles de temps arbitraires plus grands, peut être sollicité par des quantités différentes de milieu fluide, afin que la hauteur de sortie du système à cylindre et piston (2) pour le fonctionnement à faible course puisse être ajustée aux différentes hauteurs du moule (6, 7).

2. Machine de moulage par injection selon la revendication 1, **caractérisée en ce que** le volume de levage et le volume de précontrainte forment un compartiment commun.

3. Machine de moulage par injection selon la revendication 2, **caractérisée en ce que** le volume de levage est défini par la commande de la quantité de milieu fluide admis et évacué pour générer la faible course.

4. Machine de moulage par injection selon l'une quelconque des revendications 1 à 3, **caractérisée en ce que** le milieu fluide utilisé est un liquide hydraulique de type connu.

5. Machine de moulage par injection selon l'une quelconque des revendications 1 à 4, **caractérisée en ce que** le système à cylindre et piston (2) peut être déplacé vers l'intérieur de l'unité de fermeture (3) et hors de celle-ci au moyen d'unités à cylindre et piston (50) avec un axe longitudinal horizontal, aptes à être sollicitées par un milieu fluide.

6. Machine de moulage par injection selon l'une quelconque des revendications 1 à 4, **caractérisée en ce que** le système à cylindre et piston (2) peut être déplacé vers l'intérieur de l'unité de fermeture (3) et hors de celle-ci au moyen d'un ou de plusieurs systèmes d'entraînement à broche avec un axe longitudinal horizontal, actionnés par moteur électrique.

7. Machine de moulage par injection selon l'une quelconque des revendications 1 à 4, **caractérisée en ce que** le système à cylindre et piston (2) peut être déplacé vers l'intérieur de l'unité de fermeture (3) et hors de celle-ci au moyen d'un ou de plusieurs systèmes d'entraînement à crémaillère et roue dentée, avec un axe longitudinal horizontal, actionnés par moteur électrique.

8. Machine de moulage par injection selon l'une quelconque des revendications 1 à 7, **caractérisée en ce que** la surface inférieure du fond (25) du système à cylindre et piston (2), orientée vers le plateau de contre-pression (4), peut être déplacée directement sur le plateau de contre-pression (4) et une plaque de support (12) prolongeant la face de recouvrement (11) supérieure de ce dernier.

9. Machine de moulage par injection selon la revendication 8, **caractérisée en ce que** la zone du plateau de contre-pression (4) et de la plaque de support (12), laquelle entre en contact avec la surface inférieure du fond (25) du système à cylindre et piston (2), est réalisée sous la forme d'une table plane (14).

10. Machine de moulage par injection selon la revendication 8 ou 9, **caractérisée en ce qu'**au moins la zone du plateau de contre-pression (4) et de la plaque de support (12), laquelle entre en contact avec la surface inférieure du fond (25) du système à cylindre et piston (2), et/ou la surface inférieure du fond (25) du système à cylindre et piston (2) ont subi un traitement de surface destiné à diminuer le coefficient de frottement.

11. Machine de moulage par injection selon l'une quelconque des revendications 8 à 10, **caractérisée en ce qu'**un lubrifiant peut être introduit en continu ou en discontinu dans la zone entre le plateau de contre-pression (4) et la plaque de support (12), d'une part, et la surface inférieure du fond (25) du système à cylindre et piston (2), d'autre part.

12. Machine de moulage par injection selon l'une quelconque des revendications 1 à 7, **caractérisée en ce que** la surface inférieure du fond (25) du système à cylindre et piston (2), orientée vers le plateau de contre-pression (4), peut être déplacée sur le plateau de contre-pression (4) et la plaque de support (12) au moyen d'éléments (22, 23) en forme de roues ou galets, disposés dans ou sur ladite surface de fond et/ou dans ou sur le plateau de contre-pression (4) et la plaque de support (12), sachant que lesdits éléments (22, 23) en forme de roues ou galets sont maintenus chacun de telle sorte que le système à cylindre et piston (2) dans sa position de travail peut être posé sur le plateau de contre-pression (4) entre le plateau de contre-pression (4) et le plateau de fixation du moule (5) mobile.

13. Machine de moulage par injection selon la revendication 12, **caractérisée en ce que** les éléments (23) en forme de roues ou galets sont maintenus dans ou sur la surface inférieure du fond (25) du système à cylindre et piston (2) et/ou dans ou sur le plateau de contre-pression (4) et la plaque de support (12) par des unités à cylindre et piston (33) hydrauliques ou pneumatiques avec un axe longitudinal vertical.

14. Machine de moulage par injection selon la revendication 12, **caractérisée en ce que** les éléments (23) en forme de roues ou galets sont maintenus dans ou sur la surface inférieure du fond (25) du système à cylindre et piston (2) et/ou dans ou sur le plateau de contre-pression (4) et la plaque de support (12) par des systèmes de ressort (32) avec une ligne d'action verticale, dont la force de ressort, en présence de la seule sollicitation exercée par le poids du système à cylindre et piston (2), suffit pour extraire les éléments (23) en forme de roues ou galets, mais lors de la manoeuvre du vérin à faible course, apte à être mis en service en plus, autorise la pose du système à cylindre et piston (2) sur le plateau de contre-pression (4).

15. Machine de moulage par injection selon l'une quelconque des revendications 8 à 14, **caractérisée en ce que** le plateau de contre-pression (4) et la plaque de support (12) et/ou la surface inférieure du fond (25) du système à cylindre et piston (2) comportent des éléments de guidage supplémentaires en forme de rails (35), de rainures (34, 36) ou de voies de roulement (22, 23), qui coopèrent avec des éléments antagonistes adaptés, en forme d'éléments (22, 23) en forme de roues ou galets, de rainures (34, 36), de tétons de guidage ou de surfaces de roulement (24).

16. Machine de moulage par injection selon l'une quelconque des revendications 8 à 15, **caractérisée en ce que** le système à cylindre et piston (2), dans sa zone de fond, est relié par l'intermédiaire d'un poussard (54) rigide, par conjugaison de force avec la tige de piston (51) d'une unité à cylindre et piston (50) hydraulique ou pneumatique, actionnable horizontalement, laquelle est guidée à l'extérieur du cylindre par un tube (52, 53), qui a une longueur suffisante, est fendu pour le passage du poussard (54) rigide et est suffisamment lisse sur sa paroi intérieure, et qui est disposé horizontalement dans ou en dessous de la plaque de support (12) et dans le plateau de contre-pression (4).

17. Machine de moulage par injection selon la revendication 8, 9 ou 15, **caractérisée en ce que** la surface inférieure du fond (25) du système à cylindre et piston (2) comporte des évidements (55) en forme de poches, dans chacun desquels est agencée au moins une buse (56), qui peut être sollicitée par un milieu gazeux sous haute pression, par l'intermédiaire d'un système de conduites (57) disposé dans le système à cylindre et piston (2).

18. Machine de moulage par injection selon la revendication 17, **caractérisée en ce que** le milieu gazeux utilisé est de l'air fortement comprimé.

19. Machine de moulage par injection selon l'une quelconque des revendications 8 à 18, **caractérisée en ce que** le système à cylindre et piston (2) est disposé sur une plaque de transport (20) et est relié par conjugaison de force à celle-ci, la face inférieure de la plaque de transport (20) formant la surface inférieure du fond (25) du système à cylindre et piston (2).

20. Machine de moulage par injection selon la revendication 19, **caractérisée en ce que** l'assemblage par conjugaison de force entre le système à cylindre et piston (2) et la plaque de transport (20) est un assemblage séparable.
